# EUROPEAN PATENT SPECIFICATION

(11) **EP 3 279 912 B1**
(45) Date of publication and mention of the grant of the patent: **08.09.2021**
(21) Application number: 17181348.8
(22) Date of filing: 14.07.2017
(51) Int. Cl.: H01H 25/04, B60Q 1/00

(54) **SWITCH DEVICE**
SCHALTVORRICHTUNG
DISPOSITIF DE COMMUTATION

(30) Priority: 04.08.2016 JP 2016153434
(43) Date of publication of application: 07.02.2018
(73) Proprietor: Kabushiki Kaisha Tokai Rika Denki Seisakusho, Ohguchi-cho Niwa-gun Aichi 480-0195 (JP)
(72) Inventor: Sato, Yuta, Aichi, 480-0195 (JP)
(74) Representative: Betten & Resch

(56) References cited:
- EP-A1- 1 310 969
- JP-A- 2015 125 851
- US-B1- 6 904 148

## Description

### BACKGROUND OF THE INVENTION

### 1. FIELD OF THE INVENTION

This invention relates to a switch device and, in particular, to a switch device that has a backlash reducing structure for an operation knob.

### 2. DESCRIPTION OF THE RELATED ART

A switch device is known in which a push button attaching structure to reduce a backlash is proposed (see e.g. JP-A-2015-095415).

The push button attaching structure disclosed by JP-A-2015-095415 is provided with a push button having a rectangular shape in a front view is movably attached to a main body, and plural long leaf springs that bias the push button in a direction to separate the push button from the main body are arranged at multiple positions except a center of the push button. The leaf springs are formed by cutting and raising a part of the main body surrounded by a slit formed by piercing the main body. A tip portion of the leaf spring in a longitudinal direction thereof contacts the push button when the push button is pushed.

JP-A-2015-095415 discloses the push button attaching structure that allows the leaf springs to locate at multiple positions except the center of the push button. Thus, this structure is configured so as to decrease the distance from the leaf spring to the tip portion for reducing the backlash in the push button.
EP1310969A1 describes a pressure member unit (24) having eight dome-shaped elastic pressure members (16 to 23) made of rubber is arranged on a circuit board. A total of eight elastic pressure members are respectively provided at four corner parts (elastic pressure members 16, 18,20 and 22) of side parts of a rectangular form of a pusher (26) and at four positions (elastic pressure members 17, 19, 21 and 23) between them. Six switch parts are provided so as to only correspond to the two elastic pressure members (16 and 20) at a pair of corner parts which are located diagonally among the elastic pressure members (16 to 23) and to the elastic pressure members (17, 23, 19 and 21) respectively adjacent to both the corner parts.

### SUMMARY OF THE INVENTION

JP-A-2015-095415 teaches the push button attaching structure that is provided with the plural leaf springs formed by cutting and raising the part of the main body surrounded by the slit formed by piercing the main body. However, the leaf springs may cause a complicated internal structure so as to increase the manufacturing cost.

It is an object of the invention to provide a switch device that prevents the backlash in the operation knob without the complicated internal structure.
(1) According to an embodiment of the invention, a switch device according to claim 1 is defined. In the above embodiment (1) of the invention, the following modifications and changes (2) to (6) can be made.
(2) The switch device further comprises a resilient sheet that covers the substrate, wherein the second resilient dome is integrally formed with the resilient sheet, wherein the first resilient dome is integrally formed with the resilient sheet.
(3) The first resilient dome is arranged while applying a preload to the operation knob.
(4) The preload is applied by a member in a periphery of the operation knob, the member being configured to press a part of the operation knob when the operation knob is not in a pressed state.
(5) The operation knob further comprises a pusher extending downward from an inside surface, and wherein the pusher contacts with the first resilient dome when the operation knob is not in a pressed state.
(6) The first resilient dome has a same shape as the second resilient dome and has no switch contact inside the first resilient dome.

### Effects of the invention

According to an embodiment of the invention, a switch device can be provided that prevents the backlash in the operation knob without the complicated internal structure.

### BRIEF DESCRIPTION OF THE DRAWINGS

Next, the present invention will be explained in conjunction with appended drawings, wherein:
**FIG.1** is a plan view schematically explaining an example of a steering wheel comprising a steering switch according to the preferred embodiment in the present invention;
**FIG.2** is a plan view schematically showing an example of the steering switch;
**FIG.3** is a partial cross sectional view showing the steering switch cut along the line III-III in **FIG.1****;**
**FIG.4** is a partial cross sectional view showing the steering switch cut along the line IV-IV in **FIG.1****;**
**FIG.5** is a partial cross sectional view showing another example of the steering switch corresponding to **FIG.4** cut along the line IV-IV in **FIG.1****;** and
**FIG.6** is a graph to explain a property of a resilient dome for preloading that is applied to the steering switch.

### DETAILED DESCRIPTION OF THE PREFERRED EMBODIMENTS

Next, the embodiment according to the present invention will be described below with reference to the appended drawings.

### (Structure of the switch device)

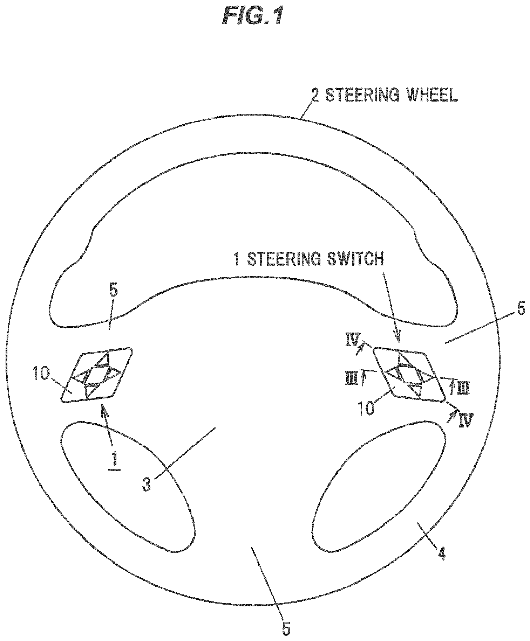

The reference numeral **1** in **FIG.1** denotes a steering switch that is a typical switch device according to the present embodiment. The steering switches **1** are respectively attached on right and left spokes **5** in viewing the steering wheel **2** in a front view. Right and left steering switches **1** comprises practically same shapes and structures. Although the right and left switches **1** are arranged in a direction shown in **FIG.1** as an example, the switches **1** are preferable to be arranged in a direction such that the driver's finger can reach and the driver can operate easily. Meanwhile, as an example of the steering switch **1,** although an operation knob **10** that can tilting operate in the vertical and horizontal directions is shown, it is not limited to.

The steering wheel **2** comprises a cylindrical boss (not shown) that is fitted and fixed on an end of a steering shaft (not shown). The steering wheel **2** is provided with a pad **3** that is attached on the boss, a ring **4** that covers a ring core metal, and a spoke **5** that covers a part of three spoke core metals that joint the ring core metal in the ring **4** and the boss each other.

For example, the steering switch 1, which is not limited to thereof, is used as a switch device that outputs an operation signal to operate in-vehicle equipment such as an air-conditioner, an audio device, a car navigation system, and a door mirror. Also, the steering switch **1** is used as a switch device to output an operation signal to change image function or image display corresponding to an icon by choosing and displaying the icon indicated in the display.

As shown in **FIGS.1** to **3****,** the steering switch **1** comprises the operation knob **10** that is formed in a rhombus shape in viewing the steering wheel **2** in the front view. The rhombus opening **12** is formed in an intermediate portion of the operation knob **10.** An external opening peripheral portion of the opening **12** is configured as a rhombus circular shaped peripheral operation portion in which an operation surface **11** is exposed.

The operation knob **10** is formed in a cap shape that has an opening opened downwardly. The operation knob **10** comprises an upper surface as the operation surface **11** having the rhombus shape, and a peripheral wall portion formed at an outer peripheral edge of the upper surface. Four triangular shaped symbols that show operation positions are formed on the upper surface.

A central operation portion that is formed separately or integrally from the operation knob **10,** or various parts such as a design member including an emblem is arranged in the opening **12** of the operation knob **10.** For example, the central operation portion is preferable to configure as a key for detection switch such that an operator determines an operation of the process corresponding to an operation item indicated in the display, or a key for selection switch such that the operator selects the operation item indicated in the display.

As an example of the central operation portion formed separately from the operation knob **10,** a resilient dome type structure so as to hold the central operation portion above a switch contact can be used. Moving the central operation portion upwardly is prevented by engaging the central operation portion with an internal opening peripheral portion of the opening **12** of the operation knob **10.**

As an example of the central operation portion formed integrally with the operation knob **10,** a spheroidal tilting shaft so as to tilt the operation knob **10** can be provided. For example, the tilting shaft can support the operation knob **10** tiltably from the tilting shaft as the reference point by holding the tilting shaft in a spherical holding portion formed by protruding a substrate. Moving the operation knob **10** upwardly is prevented by engaging the tilting shaft with the spherical holding portion of the opening **12** of the operation knob **10.**

The operation knob **10** in a shown example is formed as a four directions switch that can input four directions for the vertical and horizontal directions. The operation knob **10** is provided with four switch contacts **15.** The switch contacts **15** are respectively arranged in four triangular areas that divide the rhombus as the operation surface **11** of the operation knob **10** into first to fourth quadrants across a long axis X and a short axis Y that are diagonal lines of the rhombus. The switch contacts **15** are arranged in four directions on the same circumference in the operation surface **11** of the operation knob **10.** Predetermined switch signals are generated by tilting the operation knob **10** to any one of the four directions.

Respective switch contacts **15** are provided with fixed contacts **15a** arranged on the substrate **6,** and moving contacts **15b** that can contact and separate with the fixed contacts **15a.** And respective switch contacts **15** have practically same structures. Material of the contact is made of metal having conductivity such as copper. The substrate **6** is made from a member such as a rigid plate or a flexible plate. The fixed contact **15a** is connected to a wiring pattern of the substrate **6.**

The switch contact **15** is provided with a resilient sheet **16** made from a member having spring property such as metal, rubber, or soft resin. The resilient sheet **16** comprises a resilient dome **17** from which a surface of the resilient sheet **16** which corresponds to the fixed contact **15a** is upwardly protruded. The resilient dome **17** is operable to resiliently deform and reverse so as to contact the moving contact **15b** with the fixed contact **15a** at a contact position. The resilient dome **17** is configured as a feeling moderation generating member that generates switch feeling moderation.

The resilient dome **17** is provided with a practically truncated cone shaped skirt **17a,** and a circular moving part **17b** that forms an upper surface of the skirt **17a.** The skirt **17a** is formed so as to resiliently deform and reverse caused by pressure in switch operating. The moving contact **15b** is formed at an inner bottom surface of the moving part **17b** and is in a non-contact state separated from the fixed contact **15a** when the switch is not operated.

A pusher **13** extended from an inner bottom surface of the operation knob **10** is held on the upper surface of the resilient dome **17.** The skirt **17a** of the resilient dome **17** is reversed when the switch contact is pressed by transmitting operation force for the pusher **13** from the operation knob **10** to the resilient dome **17.** A lower surface of the moving contact **15b** in the resilient dome **17** abuts on the fixed contact **15a** on the substrate **6.** It causes a switch-on state in which the fixed contact **15a** and the moving contact **15b** are short-circuited.

When the operation force of the operation knob **10** is released, the resilient dome **17** is automatically restored to the former dome shape. The moving contact **15b** in the resilient dome **17** is released from the fixed contact **15a** on the substrate **6.** Then the operation knob **10** returns to an early neutral state. Thus, the operation knob **10** is in a switch-off state.

### (Backlash reducing structure of the operation knob)

The steering switch **1** configured as described above has the most important characteristic in a structure to reduce backlash in the operation knob **10** having the rhombus shape in the plan view. A rubber dome generally used in switch device is used as a backlash reducing structure. In the shown example, such rubber dome is configured by the resilient dome 18.

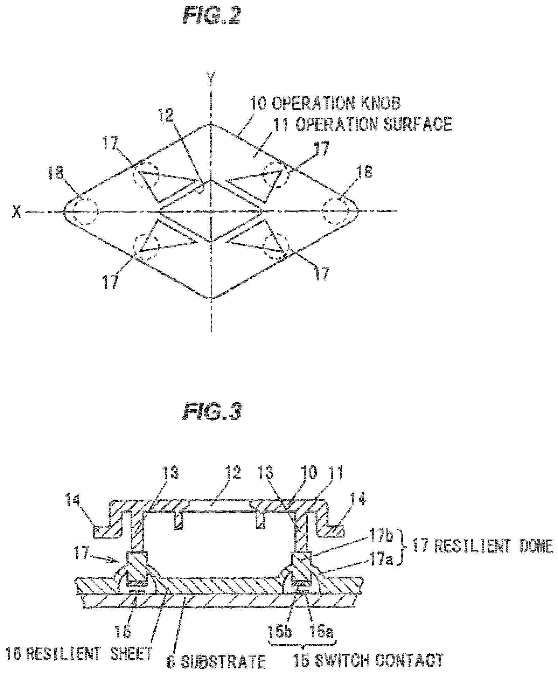

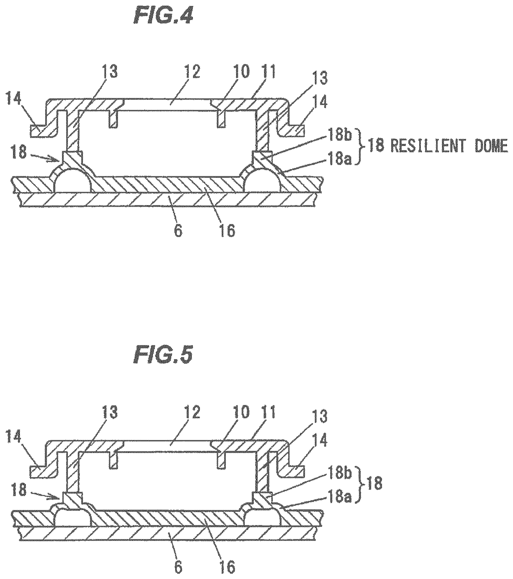

As shown in **FIGS.2** and **4****,** an backlash reducing resilient dome **18** that fails to reverse in pressing the operation knob **10,** and fails to have the switch feeling modification is formed integrally with the resilient sheet **16** at an corner angle portion in both long axes (X direction) of the operation knob **10.** The resilient dome **18** is arranged at a central end portion corresponding to two sides that puts the long axis X of the operation knob **10** between the two sides. Two resilient domes **18** have the same shape and structure. Common resilient sheet **16** with the resilient sheet **16** forming the switch contact resilient dome **17** is used for the resilient dome **18.**

The backlash reducing resilient dome **18** is provided with a practically truncated cone shaped skirt **18a,** and a circular moving part **18b** that forms an upper surface of the skirt **18a.** Although the backlash reducing resilient dome **18** has practically similar shape to the switch contact resilient dome **17,** the backlash reducing resilient dome **18** comprises no moving contact on an inner bottom surface of the moving part **18b.** The skirt **18a** of the resilient dome **18** is preferable to set an angle and a wall thickness so as to deform with small resilient repulsion force against the operation knob **10.**

The pusher **13** extended from the inner bottom surface of the operation knob **10** keeps not reversing the switch contact resilient dome **17.** And the pusher **13** is arranged with contacting the backlash reducing resilient dome **18.** The operation knob **10** is attached on the internal opening peripheral portion of the steering wheel **2** with no preload in the resilient dome **18.**

When the operation knob **10** is pressed, the skirt **18a** of the resilient dome **18** is pressed with reversing incompletely by acting force downwardly to the backlash reducing resilient dome **18.** A recovering force acts at an end of the operation knob **10** in the longitudinal direction by a resilient repulsion force obtained in compression in the skirt **18a.** Such force can reduce backlash in the operation knob **10.**

As referring to **FIG.5, FIG.5** shows another example of the backlash reducing structure different from the structure shown in **FIG.4****.**

As shown in **FIG.5****,** a flange **14** protruding outwardly is integrally formed at a peripheral wall edge of the operation knob **10.** The operation knob **10** is prevented from escaping from the internal opening peripheral portion of the steering wheel **2** by engaging the flange **14** with the internal opening peripheral portion of the steering wheel **2.** And the pusher **13** of the operation knob **10** is held on the upper surface of the backlash reducing resilient dome **18.**

The pusher **13** of the operation knob **10** contacts the backlash reducing resilient dome **18** with pressing in engaging the flange **14** of the operation knob **10** with the internal opening peripheral portion of the steering wheel **2.** The skirt **18a** of the resilient dome **18** is pressed with reversing incompletely. The preload that the flange **14** of the operation knob **10** presses at the internal opening peripheral portion of the steering wheel **2** is applied by the resilient repulsion force obtained in pressing the skirt **18a.**

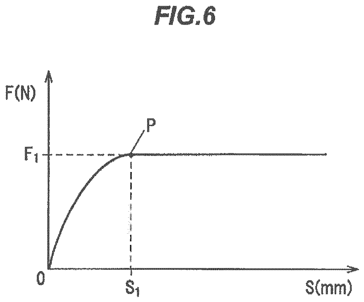

A spring property of the backlash reducing resilient dome **18** exhibits behavior as shown in **FIG.6****.** As to **FIG.6****,** the horizontal axis shows stroke amount S in the preload in the resilient dome **18,** and the vertical axis shows the force F applied to the resilient dome **18.** The point P (S₁, F₁) plotted on the graph shown in **FIG.6** is a setting point so as to keep the operation knob **10** with applying the preload. Setting an assembling state to the point P (S₁, F₁) allows the resilient dome **18** can keep constantly applying the preload without a parts error or an assembling error. Moreover, since increasing force is low if the end of the operation knob **10** in the longitudinal direction is pressed, uncomfortable feeling caused by the increasing force can decrease.

### (Effects of the embodiment)

The below effect is provided in addition to the above effect by using the steering switch **1** configured as described above.

The rubber dome that is the resilient dome **18** generally used in the switch device can be effectively used for the backlash reducing structure of the operation knob **10** without using a spring to bias the knob or an complicated mechanics.

Backlash in the operation knob **10** can decrease by a simple structure that uses the backlash reducing resilient dome **18** made from the common resilient sheet **16** common with the resilient sheet **16** forming the switch contact resilient dome **17.**

Since the repulsion force in the backlash reducing resilient dome 18, which is generated in tilting the operation knob **10** in pressing the operation knob **10,** is applied, smooth movement of the operation knob **10** can be ensured by the repulsion force.

Degrees of freedoms can increase since a tolerance in a component of the switch device increases.

Although the configuration example that the rhombus shaped operation knob **10** comprises the backlash reducing structure is shown in the present embodiment, the present embodiment is not limited to. Obviously, the backlash reducing structure according to the present embodiment can apply to the operation knob **10** having an operation surface shape such as a rectangular shape a parallelogram, and an elliptic shape, which have the long axis and the short axis that cross in the center.

As the backlash reducing resilient dome **18,** it is effective to properly choose conditions such as material, thickness, size, shape, an assemble portion, arrangement number, combined shape, and a spring constant. Several of modification can be allowed.

Further, a push switch such as a tactile switch may be used as the switch contact 15 instead of a resilient dome type contact member. The switch contact **15** may be a structure in which the push switch is arranged in a hollow space of the resilient dome.

Furthermore, although the switch device attached on the steering wheel **2** is shown in the shown examples, it is not limited to. For example, the switch device can be arranged at a periphery of driver's sheet such as a door armrest, an instrument panel, and a center console in vehicle interior.

Obviously, this switch device can apply to various handheld terminals such as a cellphone and a camera.

As shown in above explanations, although the representative embodiments according to the present invention, variations, or the shown examples have been described the claimed invention is not intended to be limited to. Further, it should be noted that all combinations of the features described in the embodiments, variations, or the shown examples and the examples are not necessary to solve the problems of the invention, which has a scope of protection defined by the appended claims.

## Claims

1. A switch device (1), comprising:
a substrate (6);
an operation knob (10) that is arranged above the substrate (6) and that comprises an operation surface (11) formed into a shape comprising a long axis and a short axis;
a switch contact (15) that is arranged on the substrate (6) corresponding to a region in the operation surface (11) between the long axis and the short axis, and that allows a switching operation according to a press operation of the operation knob (10);
a first resilient dome (18) that is arranged on the substrate (6) corresponding to an end in the long axis, and that is resiliently deformable and is configured to bias the operation knob (10) in a direction separating from the substrate (6); and
a second resilient dome (17) that is resiliently deformable and arranged corresponding to the region in the operation surface (11) between the long axis and the short axis, and that allows a switching operation of the switch contact (15),
wherein, when the operation knob (10) is pressed, the first resilient dome (18) fails to reverse and the second resilient dome (17) reverses.

2. The switch device (1) according to claim **1,** further comprising:
a resilient sheet (16) that covers the substrate (6),
wherein the second resilient dome (17) is integrally formed with the resilient sheet (16),
wherein the first resilient dome (18) is integrally formed with the resilient sheet (16).

3. The switch device (1) according to claim **1** or **2,** wherein the first resilient dome (18) is arranged while applying a preload to the operation knob (10).

4. The switch device (1) according to claim **3,** wherein the preload is applied by a member in a periphery of the operation knob (10), the member being configured to press a part of the operation knob (10) when the operation knob (10) is not in a pressed state.

5. The switch device (1) according to any one of claims **1** to **4,** wherein the operation knob (10) further comprises a pusher (13) extending downward from an inside surface, and wherein the pusher (13) contacts with the first resilient dome (18) when the operation knob (10) is not in a pressed state.

6. The switch device (1) according to any one of claims **1** to **5,** wherein the first resilient dome (18) has a same shape as the second resilient dome (17) and has no switch contact (15) inside the first resilient dome (18).

## Patentansprüche

1. Eine Schaltvorrichtung (1), die Folgendes umfasst:
ein Substrat (6);
einen Betätigungsknopf (10), der oberhalb des Substrats (6) angeordnet ist und der eine Betätigungsfläche (11) aufweist, die in einer Form ausgebildet ist, die eine lange Achse und eine kurze Achse aufweist;
einen Schaltkontakt (15), der auf dem Substrat (6) entsprechend einem Bereich in der Betätigungsfläche (11) zwischen der langen Achse und der kurzen Achse angeordnet ist, und der einen Schaltvorgang entsprechend einer Druckbetätigung des Betätigungsknopfes (10) ermöglicht;
eine erste elastische Kuppel (18), die auf dem Substrat (6) entsprechend einem Ende in der langen Achse angeordnet ist, und die elastisch verformbar ist und so konfiguriert ist, dass sie den Betätigungsknopf (10) in eine Richtung belastet, die von dem Substrat (6) wegführt; und
eine zweite elastische Kuppel (17), die elastisch verformbar ist und entsprechend dem Bereich in der Betätigungsfläche (11) zwischen der langen Achse und der kurzen Achse angeordnet ist, und die einen Schaltvorgang des Schaltkontakts (15) ermöglicht,
wobei bei Betätigung des Betätigungsknopfes (10) die erste elastische Kuppel (18) nicht zurückspringt und die zweite elastische Kuppel (17) zurückspringt.

2. Schaltvorrichtung (1) nach Anspruch 1, ferner umfassend
eine elastische Folie (16), die das Substrat (6) bedeckt,
wobei die zweite elastische Kuppel (17) einstückig mit der elastischen Platte (16) ausgebildet ist,
wobei die erste elastische Kuppel (18) einstückig mit der elastischen Folie (16) ausgebildet ist.

3. Schaltvorrichtung (1) nach Anspruch 1 oder 2, wobei die erste federnde Kuppel (18) unter Aufbringung einer Vorlast auf den Betätigungsknopf (10) angeordnet ist.

4. Schaltvorrichtung (1) nach Anspruch 3, wobei die Vorlast durch ein Element in einer Peripherie des Betätigungsknopfes (10) aufgebracht wird, wobei das Element so konfiguriert ist, dass es einen Teil des Betätigungsknopfes (10) drückt, wenn sich der Betätigungsknopf (10) nicht in einem gedrückten Zustand befindet.

5. Schaltvorrichtung (1) nach einem der Ansprüche 1 bis 4, wobei der Betätigungsknopf (10) ferner einen Drücker (13) aufweist, der sich von einer Innenfläche nach unten erstreckt, und
wobei der Drücker (13) mit der ersten elastischen Kuppel (18) in Kontakt steht, wenn sich der Betätigungsknopf (10) nicht in einem gedrückten Zustand befindet.

6. Schaltvorrichtung (1) nach einem der Ansprüche 1 bis 5, wobei die erste federnde Kuppel (18) die gleiche Form wie die zweite federnde Kuppel (17) hat und keinen Schaltkontakt (15) innerhalb der ersten federnden Kuppel (18) aufweist.

## Revendications

1. Un dispositif de commutation (1), comprenant :
un substrat (6) ;
un bouton de commande (10) qui est agencé au-dessus du substrat (6) et qui comprend une surface de commande (11) formée selon une forme comprenant un grand axe et un petit axe ;
un contact de commutation (15) qui est agencé sur le substrat (6) correspondant à une zone dans la surface de commande (11) située entre le grand axe et le petit axe, et qui permet une opération de commutation en fonction d'une opération de pression du bouton de commande (10) ;
un premier dôme élastique (18) qui est agencé sur le substrat (6) correspondant à une extrémité située dans le grand axe, et qui est élastiquement déformable et est configuré pour solliciter le bouton de commande (10) dans une direction se séparant du substrat (6) ; et
un deuxième dôme élastique (17) qui est déformable élastiquement et agencé en correspondance de la zone dans la surface de commande (11) entre le grand axe et le petit axe, et qui permet une opération de commutation du contact de commutation (15) ;
lorsque le bouton de commande (10) est enfoncé, le premier dôme élastique (18) ne s'inverse pas et le deuxième dôme élastique (17) s'inverse.

2. Le dispositif de commutation (1) selon la revendication 1, comprenant en outre :
une feuille élastique (16) qui recouvre le substrat (6),
le deuxième dôme élastique (17) étant formé d'un seul tenant avec la feuille élastique (16),
le premier dôme élastique (18) étant formé d'un seul tenant avec la feuille élastique (16).

3. Le dispositif de commutation (1) selon la revendication 1 ou la revendication 2, dans lequel le premier dôme élastique (18) est agencé alors qu'il est appliqué une pré-charge au bouton de commande (10).

4. Le dispositif de commutation (1) selon la revendication 3, dans lequel la pré-charge est appliquée par un organe dans une périphérie du bouton de commande (10), l'organe étant configuré pour appuyer sur une partie du bouton de commande (10) lorsque le bouton de commande (10) n'est pas enfoncé.

5. Le dispositif de commutation (1) selon l'une quelconque des revendications 1 à 4, dans lequel le bouton de commande (10) comprend en outre un poussoir (13) s'étendant vers le bas depuis une surface intérieure, et
dans lequel le poussoir (13) est en contact avec le premier dôme élastique (18) lorsque le bouton de commande (10) n'est pas dans un état enfoncé.

6. Le dispositif de commutation (1) selon l'une quelconque des revendications 1 à 5, dans lequel le premier dôme élastique (18) a la même forme que le deuxième dôme élastique (17) et n'a pas de contact de commutation (15) à l'intérieur du premier dôme élastique (18).
